# FASCICULE DE BREVET EUROPEEN

(11) **EP 2 606 778 B1**
(45) Date de publication et mention de la délivrance du brevet: **28.01.2015**
(21) Numéro de dépôt: 12195351.7
(22) Date de dépôt: 03.12.2012
(51) Int. Cl.: A47J 31/20, A47J 31/42, A47J 19/00

(54) **Appareil électroménager de préparation de boisson comportant un récipient de travail et un dispositif de filtration**
Household appliance for preparing beverages comprising a working container and a filtration device
Elektrohaushaltsgerät zur Getränkezubereitung, das mit einem Arbeitsbehälter und einer Filtervorrichtung ausgestattet ist

(30) Priorité: 22.12.2011 FR 1162309
(43) Date de publication de la demande: 26.06.2013
(73) Titulaire: SEB S.A., 69130 Ecully (FR)
(72) Inventeur: Le Grand, Olivier, 21380 Messigny et Vantoux (FR)
(74) Mandataire: Bourrières, Patrice

(56) Documents cités:
- US-A1- 2007 137 495

## Description

La présente invention se rapporte au domaine technique général des appareils électroménagers de préparation de boisson comportant un récipient de travail présentant un fond comprenant des moyens de broyage et comportant une ouverture supérieure pour l'introduction des aliments, le récipient de travail comportant un dispositif poussoir comportant une tête insérable dans le récipient de travail par l'ouverture supérieure et comprenant un dispositif de filtration porté par une enveloppe périphérique du récipient de travail ou par la tête du dispositif poussoir.

Il est connu, de la demande de brevet US 2007/0137495, un appareil de préparation de boisson comportant un récipient de travail renfermant un outil rotatif et comprenant un filtre pour définir une barrière filtrante entre une zone de broyage disposée du côté du filtre recevant l'outil rotatif et une zone réservoir disposée à l'extérieur du filtre. Un tel appareil comporte également un poussoir pouvant être introduit à l'intérieur du récipient afin d'exercer une pression sur les aliments solides disposés dans la zone de broyage, tels que des grains, pour amener ces aliments solides en direction de l'outil rotatif et pouvoir faire l'infusion.

Un tel appareil présente l'avantage de permettre facilement la réalisation d'une infusion de café ou thé, en plaçant les aliments dans le filtre et en mixant le tout avec un peu d'eau.

Cependant, un tel appareil présente l'inconvénient de ne pas permettre l'extraction de jus d'aliment de type fruit. En effet, l'outil utilisé fait une coupe franche de ce type d'aliment à pulpe et ne permet pas de le réduire par un phénomène de broyage.

Par ailleurs, un tel appareil présente également l'inconvénient de ne pas permettre une récupération complète du jus présent dans la zone de broyage. En effet, la présence de résidu au niveau des ouvertures situées en bas du filtre empêche que le jus ne passe naturellement au travers du filtre, vers la zone réservoir, de sorte qu'une partie du jus reste emprisonnée au fond du récipient, autour de l'outil rotatif.

Aussi, un but de la présente invention est de proposer un appareil de préparation de boisson remédiant à cet inconvénient, en permettant une extraction efficace du jus pour une plus grande variété d'aliments, et qui soit simple et économique à réaliser. Un autre but de la présente invention est de proposer un appareil permettant la récupération d'une plus grande partie du jus dans la zone réservoir.

A cet effet, l'invention a pour objet un appareil électroménager de préparation de boisson comportant un récipient de travail présentant un fond comprenant des moyens de broyage et comportant une ouverture supérieure pour l'introduction des aliments, le récipient de travail comportant un dispositif poussoir comportant une tête insérable dans le récipient de travail par l'ouverture supérieure et comprenant un dispositif de filtration porté par une enveloppe périphérique du récipient de travail ou par la tête du dispositif poussoir, **caractérisé en ce que** les moyens de broyage comprennent un disque râpant.

Un tel disque râpant présente l'avantage d'être efficace pour le traitement de différent type d'aliments tels que des grains, graines, agrumes, baies, légumes, fruits, et plus particulièrement les fruits à noyau ou pépins.

De plus, un tel disque râpant présente l'avantage de posséder généralement une surface de travail relativement plane, ce qui permet d'approcher le dispositif de filtration au voisinage de cette surface et de limiter de facto le volume de la zone de broyage, permettant ainsi de récupérer une grande partie du jus dans la zone réservoir.

Selon une autre caractéristique de l'invention, la tête couvre au moins la moitié de la surface du disque râpant.

Selon une autre caractéristique de l'invention, le récipient de travail est cylindrique.

Selon une autre caractéristique de l'invention, le dispositif de filtration comporte au moins un élément de filtration.

Selon une autre caractéristique de l'invention, le dispositif poussoir comporte une poignée faisant saillie à l'extérieur du récipient de travail.

Selon une autre caractéristique de l'invention, le dispositif poussoir est monté mobile en translation sur un couvercle permettant la fermeture du récipient de travail.

Selon une autre caractéristique de l'invention, la tête du dispositif poussoir est montée coulissante dans le récipient de travail.

Selon une autre caractéristique de l'invention, le couvercle comporte un palier de guidage qui coopère avec une tige poussoir pour guider cette dernière dans le couvercle.

Selon une autre caractéristique de l'invention, le disque râpant coopère par une connexion mécanique avec une base motorisée entraînant le disque râpant en rotation autour d'un axe de rotation.

Selon une autre caractéristique de l'invention, le récipient de travail comporte une embase séparable de la base motorisée.

Selon une autre caractéristique de l'invention, les moyens de broyage comprennent une rainure sur sa périphérie.

Selon une autre caractéristique de l'invention, la rainure des moyens de broyage présente une inclinaison d'un angle de 5 à 60° par rapport à l'axe de rotation des moyens de broyage.

Selon une autre caractéristique de l'invention, le dispositif de filtration comprend une pluralité d'éléments de filtration empilables.

Selon une autre caractéristique de l'invention, les éléments de filtration présentent des trous de passage de différents diamètres.

Selon une autre caractéristique de l'invention, les éléments de filtration sont identiques et décalés angulairement les uns par rapport aux autres.

Une telle disposition permet d'obtenir, avec un seul type d'élément de filtration, des niveaux de filtration variés pour la réalisation de jus avec un degré de pulpe variable de manière économique. De plus, le nettoyage des éléments de filtration est grandement facilité par l'utilisation de disques ayant des diamètres de trou de passage convenables.

Selon une autre caractéristique de l'invention, le disque râpant est plan.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue en perspective d'un appareil de préparation culinaire selon un mode particulier de réalisation de l'invention,
- la figure 2 est une vue en coupe de l'appareil de la figure 1,
- la figure 3 est une vue en perspective du dispositif de filtration représenté seul côté éléments filtrants,
- la figure 4 est une vue en perspective du dispositif de filtration représenté seul côté tête du dispositif de filtration,
- la figure 5 est une vue en perspective d'un appareil de préparation culinaire selon un second mode particulier de réalisation de l'invention,
- la figure 6 est une vue en coupe de l'appareil selon la ligne VI-VI de la figure 5.

Seuls les éléments nécessaires à la compréhension de l'invention ont été représentés. Pour faciliter la lecture des dessins, les mêmes éléments portent les mêmes références d'une figure à l'autre.

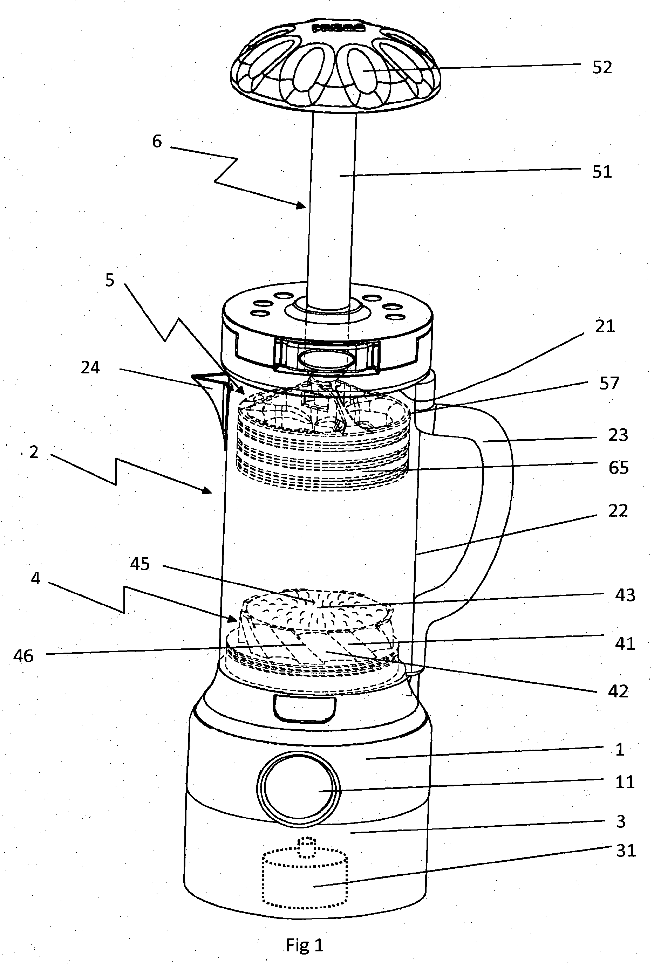

La figure 1 représente un appareil électroménager de préparation de boisson, de type broyeur, comportant une embase 1 servant de socle à un récipient de travail 2 amovible apte à contenir des aliments liquides ou solides, le récipient de travail 2 présentant une enveloppe 22 comprenant une extrémité supérieure 21 ouverte par laquelle des aliments peuvent être introduits dans le récipient de travail, l'enveloppe 22 étant munie d'une poignée de préhension 23 et d'un bec verseur 24.

L'embase 1 repose classiquement sur une base motorisée 3 intégrant un moteur 31 dont la mise en route et la vitesse de fonctionnement sont contrôlées au moyen d'un bouton de commande 11.

Le moteur 31 permet l'entraînement des moyens de broyage 4 constitués par un outil rotatif représenté en pointillé sur la figure 1, cet outil rotatif 4 étant disposé dans le fond du récipient de travail 2.

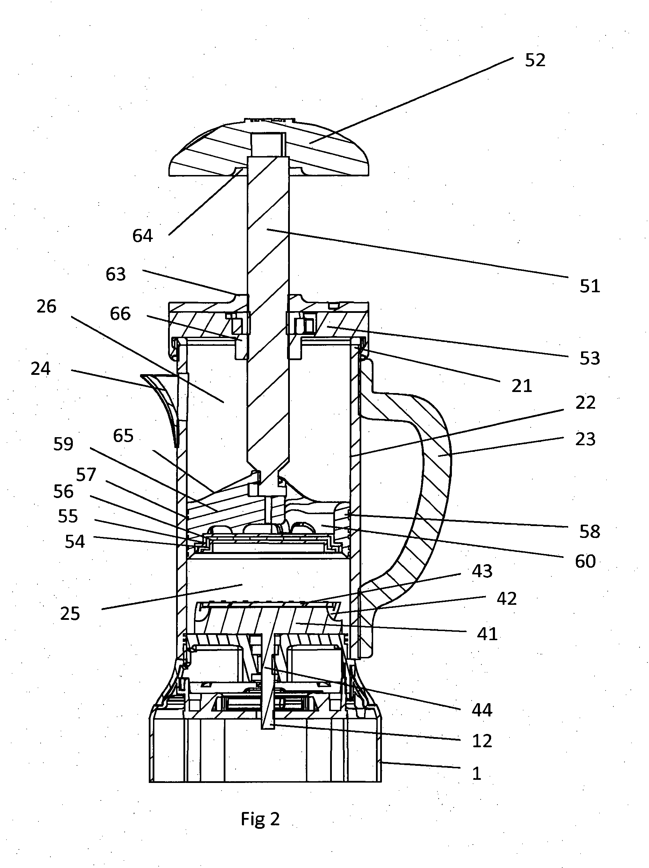

Conformément aux figures 1 et 2, l'outil rotatif 4 comporte avantageusement un corps 41 cylindrique comprenant une pluralité de rainures 42, visibles sur la figure 1, réparties sur sa périphérie, et comprend un disque râpant 43 plan supporté par le corps 41. Le disque râpant 43 est solidaire en rotation du corps 41 et comporte avantageusement des aspérités 45 réparties sur sa surface. De manière préférentielle, les rainures présentent un angle d'inclinaison 46 par rapport à l'axe de rotation compris entre 5° et 60° et avantageusement de l'ordre de 45°.

Le corps 41 est entraîné en rotation au moyen d'un arbre d'entraînement 44 faisant saillie sur la face inférieure du corps 41, l'arbre d'entraînement 44 venant s'accoupler de manière amovible avec un entraîneur rotatif de la base motorisée 3, non représenté sur les figures, lorsque le récipient de travail 2 est disposé sur la base motorisée 3.

Le récipient de travail 2 renferme un dispositif de filtration 5 venant en regard de l'outil rotatif 4 et définissant une barrière filtrante divisant le volume intérieur du récipient de travail 2 entre une zone de broyage 25 située dans la partie inférieure du récipient de travail 2, contenant l'outil rotatif 4, et une zone réservoir 26 située en partie supérieure du récipient de travail 2.

De manière avantageuse, l'extrémité supérieure 21 du récipient de travail est fermée par un couvercle 53 venant recouvrir la zone réservoir 26 du récipient de travail 2, le couvercle 53 comportant un passage permettant la translation manuelle d'un dispositif poussoir 6 comprenant une tige poussoir 51 présentant une extrémité supérieure solidaire d'une poignée 52 et une extrémité inférieure solidaire d'une tête 65 supportant le dispositif de filtration 5.

Le couvercle 53 comporte un palier de guidage 66 facilitant la translation de la tige poussoir 51 et comprend avantageusement un bossage muni d'une surface de contact 63 comportant une butée de fin de course du dispositif poussoir 6, la poignée 52 comportant une surface d'appui 64 équivalente venant en regard de la surface de contact 63.

Ainsi une position haute du dispositif poussoir 6 est définie lorsque la tête 65 du dispositif poussoir 6 est à proximité ou en contact avec le couvercle 53 suivant la représentation de la figure 1.

A l'inverse, une position basse du dispositif poussoir 6 est définie lorsque la tête 65 du dispositif poussoir 6 est à proximité du disque râpant 43 suivant la représentation de la figure 2 ou lorsque la surface d'appui 64 vient en contact avec la surface de contact 63 de fin de course du couvercle.

Conformément aux figures 2 à 4, le dispositif de filtration 5 comporte une pluralité d'éléments de filtration 54, 55, 56, typiquement des disques, supportés par la tête 65, présentant une zone périphérique 57 adaptée à la forme de l'enveloppe 22 du récipient de travail 2, la zone périphérique 57 présentant des éléments de guidage 58 permettant de faciliter l'introduction, puis la translation de la tête 65 au sein du récipient de travail 2.

La tête 65 est avantageusement constituée par une pièce moulée en matière plastique et est traversée par trois passages 60 permettant le cheminement du jus entre les deux zones 25, 26 du récipient de travail 2, les passages 60 étant séparés par des nervures 59 reliant la zone périphérique 57 et une partie centrale 61 du dispositif de filtration 5, la partie centrale 61 présentant avantageusement un système de connexion rapide avec la tige poussoir 51.

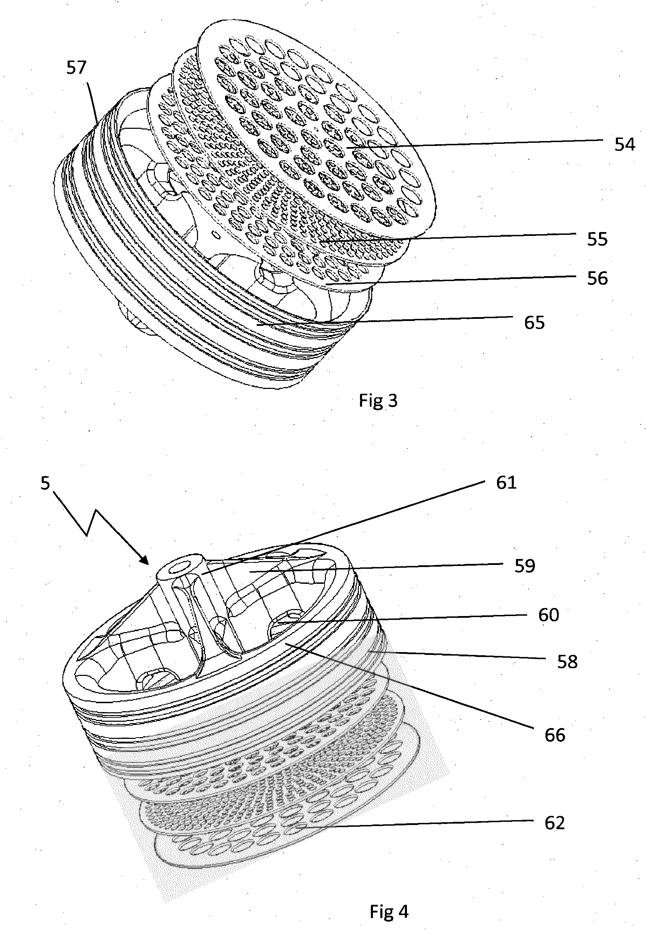

Conformément à la figure 3, les disques de filtration 54, 55, 56 comportent des trous de passage 62 de différents diamètres, répartis sur la surface des disques de filtration 54, 55, 56, permettant par leurs dispositions le maintien des aliments à broyer dans la zone de broyage 25 et le passage par les trous de passage 62 du jus extrait par broyage des aliments.

Le fonctionnement de l'appareil électroménager et son procédé d'utilisation vont maintenant être décrits.

Lorsque l'utilisateur souhaite réaliser un jus d'un aliment, il insère l'aliment dans le récipient de travail 2, puis il insère le dispositif de filtration 5 préalablement monté solidairement avec la tige poussoir 51 dans le récipient de travail 2, en position haute. Ce positionnement permet la translation dans le récipient de travail 2 de l'ensemble comportant le dispositif de filtration 5, la tige poussoir 51 et la poignée 52 en appuyant sur la poignée 52 typiquement de manière verticale vers le bas, la mise en place du couvercle 53 sur l'extrémité supérieure 21 du récipient de travail 2 permettant de réduire le risques d'éclaboussures.

L'utilisateur actionne ensuite le bouton de commande 11, ce qui provoque la mise en marche du moteur 31 de l'appareil et l'entraînement en rotation de l'outil rotatif 4, les aliments se trouvant dans la zone de broyage 25 se trouvant progressivement râpés par les aspérités présentes à la surface de l'outil rotatif 4.

L'utilisateur pousse ensuite verticalement sur le dispositif poussoir 6 jusqu'à ce que le dispositif de filtration 5 vienne à proximité du disque râpant 43.

Le jus qui en résulte se diffuse en grande partie, par l'effet de la force centrifuge, vers la périphérie du récipient de travail 2, au travers des disques de filtration 54, 55, 56 du dispositif de filtration 5, et est recueilli dans la zone réservoir 26.

Avantageusement, par l'effet de la force centrifuge, les rainures 42 de l'outil rotatif 4 permettent de maintenir les aliments broyés sur la périphérie du récipient de travail 2, facilitant ainsi l'alimentation en aliment non broyé de la partie centrale du disque râpant 43.

Durant cette phase de broyage, le dispositif poussoir 6 en translation vers le disque râpant 43 présente un premier avantage de faciliter la remontée de jus vers la zone réservoir 26.

Durant cette phase de broyage, le dispositif poussoir 6 en translation vers le disque râpant 43 présente un second avantage de maintenir les aliments en zone de broyage 25, et plus particulièrement les aliments non broyés, en contact avec le disque râpant 43.

Cette descente du dispositif poussoir 6 s'effectue jusqu'à la position basse, en fonction de la quantité restante d'aliment réduit en purée dans la zone de broyage 25.

Lors de cette descente du dispositif poussoir 6 au sein de la zone de broyage 25, le dispositif poussoir 6 agit tel un piston et exerce une pression sur le jus présent dans la zone de broyage 25 de sorte que le jus est chassé vers la zone réservoir 26 en passant par les disques de filtration 54, 55, 56 du dispositif de filtration 5.

De cette manière, la quasi-intégralité du jus généré par le broyage est recueillie dans la zone réservoir 26.

Un appareil de préparation culinaire muni d'un tel dispositif poussoir 6 présente donc l'avantage d'améliorer grandement la quantité de jus récupéré dans la zone réservoir 26 suite au broyage des aliments.

Un appareil de préparation culinaire muni d'un tel dispositif poussoir 6 présente également l'avantage supplémentaire d'améliorer grandement le nettoyage par la récupération du résidu, obtenu suite au broyage des aliments, qui se présente sous la forme d'une galette en regard du piston.

Un tel appareil de préparation culinaire, dans lequel le récipient de travail 2 peut être désaccouplé de la base motorisée 3, présente également l'avantage de faciliter grandement le versement du jus obtenu, le récipient 2 étant plus léger et manoeuvrable. De plus, une telle séparation du récipient de travail 2 et de la base motorisée 3 permet de faciliter grandement le nettoyage du récipient de travail.

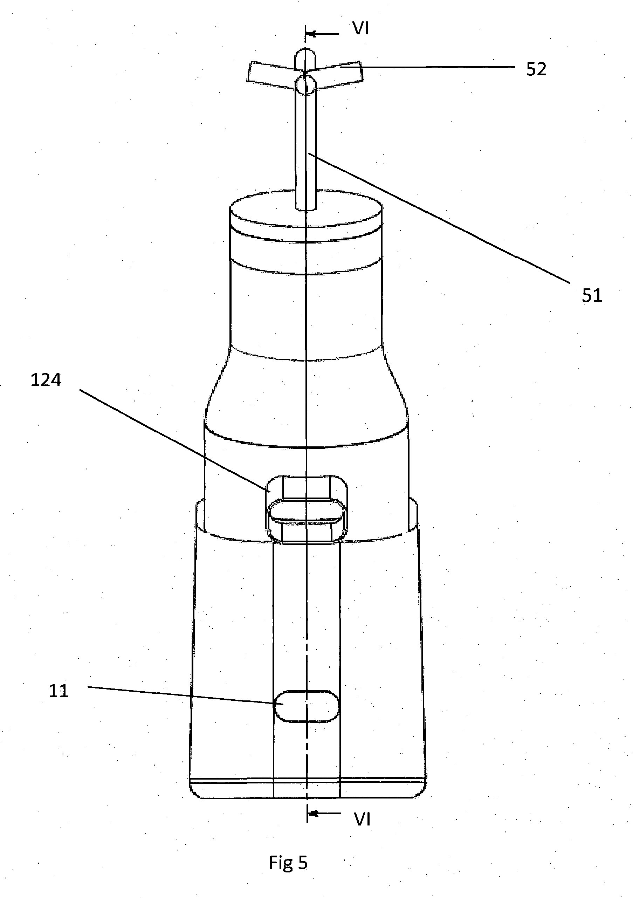

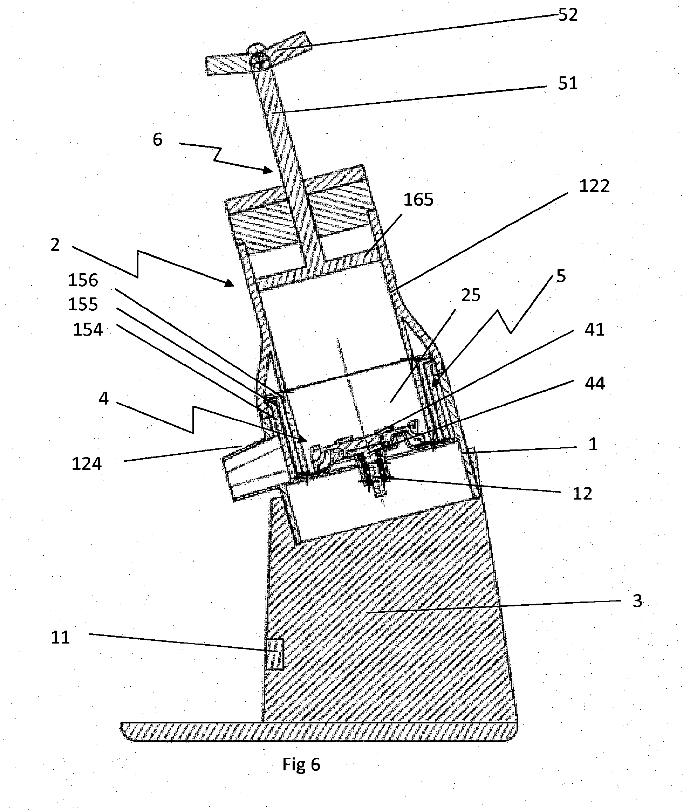

Les figures 5 et 6 illustrent un second mode de réalisation de l'appareil selon l'invention, dans lequel les éléments communs avec le premier mode de réalisation portent les mêmes références. Cette variante de réalisation se différencie notamment du premier mode de réalisation en ce que le dispositif poussoir 6 comporte une tête 165 qui est uniquement conformée pour permettre de pousser les aliments vers les moyens de broyage 4 dans la zone de broyage 25. De plus, dans ce cas, le dispositif de filtration 5 comporte trois éléments de filtration 154, 155, 156, portés par une enveloppe 122 du récipient de travail 2, à l'intérieur de l'enveloppe 22 de sorte que le dispositif de filtration 5 se situe à la périphérie des moyens de broyage 4 et forme une barrière filtrante située entre les moyens de broyage 4 et une ouverture de l'enveloppe 122 communiquant avec un bec verseur 124 situé sensiblement à la base de l'enveloppe 122. De manière préférentielle, les trois éléments de filtration 154, 155, 156 présentent une forme de révolution de type cylindrique. Cette géométrie cylindrique des éléments de filtration permet d'emboiter les éléments de filtration 154, 155, 156, les uns dans les autres afin que la surface filtrante de chaque élément se corresponde notamment sur toute leur hauteur.

Le fonctionnement de l'appareil électroménager selon cette variante de réalisation va maintenant être décrit.

Lors de la descente du dispositif poussoir 6, quand l'utilisateur pousse verticalement sur le dispositif poussoir 6, le jus obtenu qui en résulte se diffuse en grande partie, par l'effet de la force centrifuge, vers la périphérie du récipient de travail 2 de manière identique à l'appareil selon le premier mode de réalisation ; cependant le jus traverse presque directement le dispositif de filtration 5 par l'effet de la force centrifuge qui entraîne le jus en combinaison avec la pression exercée par le dispositif poussoir 6. Le passage immédiat du jus obtenu au travers du dispositif de filtration permet à l'utilisateur de récupérer très rapidement ce jus qui se déverse par gravité par le bec verseur 124 situé en position basse de l'enveloppe 122 directement dans un contenant de type verre, bol disposé en sortie et sous le bec verseur 124.

Dans ce cas, de manière similaire au premier mode de réalisation, par l'effet de la force centrifuge, les rainures 42 de l'outil rotatif 4 permettent avantageusement de maintenir les aliments broyés sur la périphérie du récipient de travail 2, facilitant ainsi l'alimentation en aliment non broyé de la partie centrale du disque râpant 43. La surface plus importante du dispositif de filtration 5 réalisé par une géométrie cylindrique permet de limiter le colmatage des trous de passage du dispositif de filtration 5 permettant ainsi de maintenir la qualité de filtration tout au long du broyage. De même, la surface plus importante qui amène à une augmentation de la section de passage du jus dans le dispositif de filtration 5 permet de réduire l'effort de pressage.

De même, durant cette phase de broyage, le dispositif poussoir 6 en translation vers le disque râpant 43 présente également l'avantage de maintenir les aliments en zone de broyage 25, et plus particulièrement les aliments non broyés, en contact avec le disque râpant 43. Suivant cette variante, la descente du dispositif poussoir 6 s'effectue également jusqu'à la position basse, en fonction de la quantité restante d'aliment réduit en purée dans la zone de broyage 25.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, les éléments de filtration pourront comporter des trous de passage de même diamètre.

Ainsi, dans une variante de réalisation non illustrée, les éléments de filtration pourront être disposés de manière décalée angulairement afin de permettre différents niveaux de filtration du jus.

Ainsi, dans une variante de réalisation non illustrée du second mode de réalisation de l'invention, les éléments de filtration pourront être disposés sur la partie externe de l'enveloppe, typiquement en sortie du bec verseur. De manière avantageuse, les éléments de filtration présenteront un flanc de forme tronconique rendant l'ensemble empilable. Dans ce cas, le bec verseur présentera également la même forme tronconique afin de permettre le support du dispositif de filtration.

## Revendications

1. Appareil électroménager de préparation de boisson comportant un récipient de travail (2) présentant un fond comprenant des moyens de broyage (4) et comportant une ouverture supérieure pour l'introduction des aliments, ledit récipient de travail (2) comportant un dispositif poussoir (6) comportant une tête (65) insérable dans ledit récipient de travail (2) par ladite ouverture supérieure et comprenant un dispositif de filtration porté par une enveloppe périphérique (22) du récipient de travail ou par la tête du dispositif poussoir (6), **caractérisé en ce que** lesdits moyens de broyage (4) comprennent un disque râpant (43).

2. Appareil selon la revendication 1, **caractérisé en ce que** ladite tête (65) couvre au moins la moitié de la surface dudit disque râpant.

3. Appareil selon l'une quelconque des revendications 1 à 2, **caractérisé en ce que** le récipient de travail (2) est cylindrique.

4. Appareil selon l'une quelconque des revendications 1 à 3, **caractérisé en ce que** le dispositif poussoir (6) comporte une poignée (52) faisant saillie à l'extérieur du récipient de travail (2).

5. Appareil selon la revendication 4, **caractérisé en ce que** le dispositif poussoir (6) est monté mobile en translation sur un couvercle (53) permettant la fermeture du récipient de travail (2).

6. Appareil selon l'une quelconque des revendications 1 à 5, **caractérisé en ce que** ladite tête (65) du dispositif poussoir (6) est montée coulissante dans le récipient de travail (2).

7. Appareil selon l'une quelconque des revendications 3 à 6, **caractérisé en ce que** ledit couvercle (53) comporte un palier de guidage (66) qui coopère avec une tige poussoir (51) pour guider ladite tige poussoir (51) dans le couvercle (53).

8. Appareil selon l'une quelconque des revendications 1 à 7, **caractérisé en ce que** ledit disque râpant (43) coopère par une connexion mécanique (12) avec une base motorisée (3) entraînant le disque râpant (43) en rotation autour d'un axe de rotation.

9. Appareil selon la revendication 8, **caractérisé en ce que** ledit récipient de travail (2) comporte une embase (1) séparable de ladite base motorisée (3).

10. Appareil selon l'une quelconque des revendications 1 à 9, **caractérisé en ce que** lesdits moyens de broyage (4) comprennent une rainure (42) sur sa périphérie.

11. Appareil selon la revendication 10, **caractérisé en ce que** ladite rainure (42) présente une inclinaison d'un angle (46) de 5 à 60° par rapport à l'axe de rotation desdits moyens de broyage (4).

12. Appareil selon l'une quelconque des revendications 1 à 11, **caractérisé en ce que** ledit dispositif de filtration (5) comprend une pluralité d'éléments de filtration (54, 55, 56, 154, 155, 156) empilables.

13. Appareil selon la revendication 12, **caractérisé en ce que** lesdits éléments de filtration (54, 55, 56, 154, 155, 156) présentent des trous de passage (62) de différents diamètres.

14. Appareil selon l'une quelconque des revendications 12 ou 13, **caractérisé en ce que** lesdits éléments de filtration (54, 55, 56, 154, 155, 156) sont identiques et décalés angulairement les uns par rapport aux autres.

15. Appareil selon l'une quelconque des revendications 1 à 14, **caractérisé en ce que** ledit disque râpant (43) est plan.

## Patentansprüche

1. Elektrohaushaltsgerät zur Getränkezubereitung mit einem Arbeitsbehälter (2), der einen Boden mit einem Zerkleinerungswerk (4) umfasst und eine obere Öffnung zum Einbringen der Lebensmittel aufweist, wobei der genannte Arbeitsbehälter (2) einen Drücker (6) mit einem Kopf (65) aufweist, der in den genannten Arbeitsbehälter (2) über die genannte obere Öffnung eingeführt wird, und mit einer Filtervorrichtung, die auf einer Seitenverkleidung (22) des Arbeitsbehälters oder auf dem Kopf des Drückers (6) sitzt, **dadurch gekennzeichnet, dass** das genannte Zerkleinerungswerk (4) eine Raspelscheibe (43) aufweist.

2. Gerät nach Anspruch 1, **dadurch gekennzeichnet, dass** der genannte Kopf (65) mindestens die Hälfte der Oberfläche der genannten Raspelscheibe abdeckt.

3. Gerät nach einem der Ansprüche 1 bis 2, **dadurch gekennzeichnet, dass** der Arbeitsbehälter (2) zylindrisch ist.

4. Gerät nach einem der Ansprüche 1 bis 3, **dadurch gekennzeichnet, dass** der Drücker (6) einen Griff (52) aufweist, der über den Arbeitsbehälter (2) hinausragt.

5. Gerät nach Anspruch 4, **dadurch gekennzeichnet, dass** der Drücker (6) verschiebbar an einem Deckel (53) montiert ist, so dass das Schließen des Arbeitsbehälters (2) möglich ist.

6. Gerät nach einem der Ansprüche 1 bis 5, **dadurch gekennzeichnet, dass** der genannte Kopf (65) des Drückers (6) gleitend im Arbeitsbehälter (2) angeordnet ist.

7. Gerät nach einem der Ansprüche 3 bis 6, **dadurch gekennzeichnet, dass** der genannte Deckel (53) ein Führungslager (66) aufweist, das mit einer Schubstange (51) zusammenwirkt, um die genannte Schubstange (51) im Deckel (53) zu führen.

8. Gerät nach einem der Ansprüche 1 bis 7, **dadurch gekennzeichnet, dass** die genannte Raspelscheibe (43) über eine mechanische Verbindung (12) mit einer motorisierten Basis (3) zusammenwirkt und die Raspelscheibe (43) dadurch um eine Drehachse in eine Drehbewegung versetzt wird.

9. Gerät nach Anspruch 8, **dadurch gekennzeichnet, dass** der genannte Arbeitsbehälter (2) einen Sockel (1) aufweist, der von der genannten motorisierten Basis (3) trennbar ist.

10. Gerät nach einem der Ansprüche 1 bis 9, **dadurch gekennzeichnet, dass** das genannte Zerkleinerungswerk (4) an der Außenseite eine Rille (42) aufweist.

11. Gerät nach Anspruch 10, **dadurch gekennzeichnet, dass** die genannte Rille (42) in einem Winkel (46) von 5 bis 60° zur Drehachse des genannten Zerkleinerungswerks (4) steht.

12. Gerät nach einem der Ansprüche 1 bis 11, **dadurch gekennzeichnet, dass** die genannte Filtervorrichtung (5) mehrere stapelbare Filterelemente (54, 55, 56, 154, 155, 156) umfasst.

13. Gerät nach Anspruch 12, **dadurch gekennzeichnet, dass** die genannten Filterelemente (54, 55, 56, 154, 155, 156) Durchlassöffnungen (62) mit unterschiedlichen Durchmessern aufweisen.

14. Gerät nach einem der Ansprüche 12 oder 13, **dadurch gekennzeichnet, dass** die genannten Filterelemente (54, 55, 56, 154, 155, 156) identisch und winkelmäßig zueinander versetzt angeordnet sind.

15. Gerät nach einem der Ansprüche 1 bis 14, **dadurch gekennzeichnet, dass** die genannte Raspelscheibe (43) eben ist.

## Claims

1. Household electrical appliance for preparing beverages comprising a working receptacle (2) having a bottom including grinding means (4) and comprising an upper opening for the introduction of food, said working receptacle (2) comprising a pusher device (6) comprising a head (65) insertable into said working receptacle (2) through said upper opening and including a filtration device carried by a peripheral enclosure (22) of the working receptacle or through the head of the pusher device (6) of the working receptacle, **characterised in that** said grinding means (4) include a grating disc (43).

2. Appliance according to claim 1, **characterised in that** said head (65) covers at least half the area of said grating disc.

3. Appliance according to claim 1 or 2, **characterised in that** the working receptacle (2) is cylindrical.

4. Appliance according to any of claims 1 to 3, **characterised in that** the pusher device (6) comprises a handle (52) projecting outside the working receptacle (2).

5. Appliance according to claim 4, **characterised in that** the pusher device (6) is mounted movable in translation on a lid (53) for closing the working receptacle (2).

6. Appliance according to any of claims 1 to 5, **characterised in that** said head (65) of the pusher device (6) is slidably mounted in the working receptacle (2).

7. Appliance according to any of claims 3 to 6, **characterised in that** said lid (53) comprises a guide bearing (66) which cooperates with a push rod (51) for guiding said push rod (51) in the lid (53).

8. Appliance according to any of claims 1 to 7, **characterised in that** said grating disc (43) cooperates via a mechanical connection (12) with a motorised base (3) rotating the grating disc (43) about an axis of rotation.

9. Appliance according to claim 8, **characterised in that** said working receptacle (2) comprises a base (1) separable from said motorised base (3).

10. Appliance according to any of claims 1 to 9, **characterised in that** said grinding means (4) comprise a groove (42) on its periphery.

11. Appliance according to claim 10, **characterised in that** said groove (42) has an inclination of an angle (46) of 5° to 60° relative to the axis of rotation of said grinding means (4).

12. Appliance according to any of claims 1 to 11, **characterised in that** said filtration device (5) comprises a plurality of stackable filtration elements (54, 55, 56, 154, 155, 156).

13. Appliance according to claim 12, **characterised in that** said filtration elements (54, 55, 56, 154, 155, 156) have holes (62) of different diameters.

14. Appliance according to claim 12 or 13, **characterised in that** said filtration elements (54, 55, 56, 154, 155, 156) are identical and offset at an angle with respect to each other.

15. Appliance according to any of claims 1 to 14, **characterised in that** said grating disc (43) is flat.
